# EUROPÄISCHE PATENTSCHRIFT

(11) **EP 3 281 784 B1**
(45) Veröffentlichungstag und Bekanntmachung des Hinweises auf die Patenterteilung: **02.03.2022**
(21) Anmeldenummer: 17191664.6
(22) Anmeldetag: 27.11.2014
(51) Int. Cl.: B32B 17/10, G02B 27/01, C03C 27/12

(54) **FOLIE MIT ELEKTRISCH LEITFÄHIGEN STRUKTUREN**
FILM WITH ELECTRICALLY CONDUCTIVE STRUCTURES
FILMS DOTÉS DES STRUCTURES ÉLECTRIQUEMENT CONDUCTIVES

(30) Priorität: 29.11.2013 EP 13195211
(43) Veröffentlichungstag der Anmeldung: 14.02.2018
(62) Teilanmeldung aus: 14808891.7
(73) Patentinhaber: Kuraray Europe GmbH, 65795 Hattersheim (DE)
(72) Erfinder: GREB, Marco, Linsengericht 63589 (DE); KELLER, Uwe, 77210 Avon (FR)
(74) Vertreter: Janßen, Christian Oliver

(56) Entgegenhaltungen:
- EP-A1- 2 409 833
- EP-A1- 2 767 393

## Beschreibung

Die vorliegende Erfindung betrifft ein Verfahren zur Herstellung von Verbundglasscheiben mit eingebetteten elektrisch leitfähigen Strukturen unter Verwendung einer Zwischenschichtfolie auf Basis von Polyvinylacetal mit darauf befindlichen elektrisch leitfähigen Strukturen.

### Technisches Gebiet

Zur Herstellung von Verbundglasscheiben mit elektrisch leitfähigen Strukturen wie etwa Heizdrähten oder Antennen Eigenschaften sind Verfahren üblich, bei welchen Metallfilamente entweder zunächst auf die Oberfläche einer normalen PVB-Folie aufgeschmolzen bzw. in diese eingenäht werden oder die elektrisch leitfähigen Strukturen auf einer der im Laminat nach innen orientierten Glasoberflächen durch Siebdruck und anschließendes Einbrennen aufgebracht werden. In beiden Fällen besteht das Risiko von wirtschaftlichen Verlusten, falls beim Applizieren auf die normale PVB-Folie oder beim Aufbringen auf eine vorbereitete Glasscheibe Fehler auftreten. Im ersten Fall kann die PVB-Folie, im zweiten Fall das Glas nicht mehr zur Lamination verwendet werden.

Das direkte bedrucken von PET-Folien mit elektrisch leitfähigen Strukturen ist dagegen teilweise etabliert und beispielsweise können nahezu unsichtbare Heizelemente, Sensorfelder etc. darauf erzeugt werden. Eine führende Firma auf diesem Gebiet ist zum Beispiel PolyIC aus Fürth in Deutschland. Nachteilig bei einer beabsichtigten Integration solcher mit elektrisch leitfähigen Strukturen bedruckter PET-Folien in Verbundglaslaminate ist dabei jedoch, dass immer mindestens 3 Folienlagen (1 x funktionalisiertes PET, 2 x PVB-Folie) verwendet werden müssen, da PET mit der funktionalisierten Seite bzw. der Rückseite nicht direkt auf einer Glasoberfläche angeschmolzen werden kann.

Ein anderer Nachteil ist die erhöhte Komplexität der Folienkonfektionierung, die durch Kombination des Merkmales "mit elektrisch leitfähigen Strukturen" mit weiteren Funktionsmerkmalen wie "akustischer Dämpfung", "Bandfilter", "keilförmiges Dickenprofil", "Farbton" zu einer Verkomplizierung der Folienvorbereitung beim Verarbeiter führt.

Die Herstellung von Verbundglaslaminaten mit leitfähigen Schichten, die vollflächig in das Laminat eingebracht sind, ist z.B. aus EP 2409833 bekannt. WO 2010/030413 offenbart elektrisch leitfähige Zwischenschichtfilme die zwischen zwei Elektroden angebracht sind. Dies hat neben einer verminderten Transparenz des Laminats einen hohen Materialverbrauch in den leitfähigen Schichten zur Folge.

### Aufgabe

Aufgabe der vorliegenden Erfindung war es daher, auf wirtschaftliche Weise Verbundglaslaminate mit beliebigen elektrisch leitfähigen Strukturen im Inneren des Verbundglases zu bereitzustellen.

Es wurde gefunden, dass dünne Folien auf Basis von weichmacherarmem bzw. -freien Polyvinylacetal mit darauf angeordneten diskreten, elektrisch leitfähigen Strukturen in den typischen Herstellverfahren für Verbundglaslaminate direkt auf einer der Glasoberflächen angeschmolzen werden können. In Kombination mit mindestens einer Lage aus weichmacherhaltigem Polyvinylacetal können dann die üblichen geforderten Sicherheitseigenschaften von Verbundglaslaminaten erhalten werden.

Gegenstand der Erfindung ist daher ein Verfahren zur Herstellung von Verbundglaslaminaten mit elektrisch leitfähigen Strukturen durch verkleben von zwei transparenten Scheiben mit mindestens einer Folie A und mindestens einer Folie B, **dadurch gekennzeichnet, dass** die Folien A und B zwischen die zwei transparenten Scheiben positioniert werden und diese miteinander verkleben, wobei Folie A ein Polyvinylacetal PA und 0 bis 16 Gew.% mindestens eines Weichmachers WA sowie diskrete, elektrisch leitfähige Strukturen und Folie B ein Polyvinylacetal PB und mindestens 16 Gew.% mindestens eines Weichmachers WB aufweist

Unter diskreten, elektrisch leitfähigen Strukturen werden vorliegend keine flächigen Schichten sondern einzeln identifizierbare Strukturen wie Leiterbahnen, Drähte, hieraus aufgebaute Netze, Punkte sowie Kombinationen daraus verstanden. Die diskreten, elektrisch leitfähigen Strukturen können auf der Oberfläche der Folien A aufgebracht oder in diese eingebettet sein.

Die transparenten Scheiben können gleich oder unterschiedlich aus Glas PMMA oder Polycarbonat bestehen. Im Folgenden werden die Begriffe "Glasscheibe" oder "Glasoberfläche" synonym mit den Begriffen "transparente Scheibe" oder "Oberfläche der transparenten Scheibe" verwendet.

Das erfindungsgemäße Verfahren kann durchgeführt werden, das die Zwischenschicht auf eine transparente Scheibe positioniert wird indem Folie A auf eine transparente Scheibe positioniert wird, auf die Folie B und eine zweite transparente Scheibe gelegt werden. Alternativ ist es möglich, Folie B auf eine transparente Scheibe zu positionieren auf die dann Folie A und eine zweite transparente Scheibe gelegt wird.

Bevorzugt enthalten die diskreten elektrisch leitfähigen Strukturen Metalle wie Silber, Kupfer, Gold, Indium, Zink, Eisen, Aluminium. Alternativ bzw. in Kombination dazu können aber auch Halbleitermaterialien in oder auf der Folie A angeordnet sein. Weiterhin können Leitfähige Materialien auf Kohlenstoffbasis wie etwa Graphit, CNT (Carbon nano tubes) oder Graphen enthalten sein.

Die Folien A weisen auf einer oder beiden Oberfläche elektrisch leitfähige Strukturen auf.

Die elektrisch leitfähigen Strukturen können durch unterschiedliche Varianten von Druckverfahren wie zum Beispiel Sieb-, Flexo- oder Gravurdruck, Bedampfen, Besputtern, Elektroabscheidung auf der Oberfläche der Folie A erzeugt werden. Bei Druckverfahren kommen entsprechende Tinten zum Einsatz, welche unter Umständen vor der Lamination in der Regel noch getrocknet bzw. thermisch oder photonisch ausgehärtet werden können. Die elektrisch leitfähigen Strukturen können auch in Ihrer endgültigen Form erst durch die Verwendung von Lasern oder anderen Bearbeitungsmitteln (gravieren, ätzen) aus einer zunächst gröberen Struktur auf der Folie A herausgearbeitet werden.

Bei Verwendung von Druckverfahren ("printed electronics") enthalten die verwendeten Tinten bzw. Druckfarben Leitfähigkeitspartikel. Dies können Partikel aus Metallen wie aus Gold, Silber, Kupfer, Zink, Eisen oder Aluminium sowie mit Metallen beschichtete Materialien wie versilberte Glasfasern, Glaskügelchen sowie Leitfähigkeitsruß, Carbon-Nanotubes, Graphit oder Graphen sein. Weiterhin Partikel aus Halbleitern wie leitfähige Metalloxide, z.B. Indium-dotiertes Zinnoxid, dotierte Zinkoxide, Antimon-dotiertes Zinnoxid.

Die elektrisch leitfähigen Strukturen können generell zur elektromagnetischen Abschirmung von Frequenzfeldern, zur Erzeugung elektrischer Stromkreise wie Leiterbahnen oder Sende- und/oder Empfangsantennen sowie weiterer Funktionen eingesetzt werden. Dadurch können beispielsweise Heizelemente in den Glasverbund eingebracht werden, Antennen können beispielsweise im Automobilsektor zum Empfang von Radiowellen oder in der Car-to-Car-Kommunikation Verwendung finden.

Die elektrisch leitfähigen Strukturen der erfindungsgemäßen Laminate können auch als Berührungssensor ausgeführt werden was die Herstellung von interaktiven Verbundglasscheiben ermöglicht. So können z.B. Informationseingaben auf der Verbundglasscheibe (z.B. einer Windschutzscheibe oder Seitenverglasung eines KFZ oder der Glasschiebe einer Türe) zur Zugangskontrolle genutzt werden.

Bei Mehrschichtaufbauten elektronischer Elemente, d.h. leitfähiger und dielektrischer Strukturen lassen sich darüber hinaus ganze elektronische Schaltkreise oder Bauteile aufbringen. Hierunter fallen u.a. Transistoren, Widerstände, Chips, Sensoren, Displays, Leuchtdioden (z.B. OLEDs) und/oder Smart-Labels.

Die elektrisch leitfähigen Strukturen können so klein sein, dass sie mit bloßem Auge nur noch schlecht erkannt werden können. Dies bei Breiten von 1 bis 30 µm, bevorzugt 1 bis 20 µm und am meisten bevorzugt 1 bis 15 µm der Fall. Insbesondere bei flächigen Heizfeldern beträgt die Breite der Filamente weniger als 25 µm. Heizfelder können auch nur lokal, z.B. vor einem optischen Sensorsystem an einer Oberseite einer Windschutzscheibe eingebracht werden.

So kann die Folie A eine kleinere Fläche als Folie B aufweisen, sodass die Folie B in einem Teilbereich in direktem Kontakt mit mindestens einer Glasscheibe ist. Hier ist der Vorteil, dass Folie A mit ihrer elektrisch leitfähigen Struktur flexibel an beliebigen Stellen einer Automobilverglasung positioniert werden kann, ohne die gesamte Scheibe auszufüllen.

Die erfindungsgemäß eingesetzten elektrisch leitfähigen Strukturen weisen bevorzugt Dicken im Bereich von 0.1 - 50 µm, besonders bevorzugt im Bereich von 0,5 - 20 µm und bevorzugt im Bereich von 1 - 10 µm auf.

Im Folgenden wird mit dem "Ausgangszustand" der Zustand der Folien A und B vor dem Laminieren, d.h. im noch getrennten Zustand verstanden.

Die Folien A und B können im Ausgangszustand vor dem Laminieren der Schichten als auch in dem im Verbundglaslaminat befindlichen Zwischenschichtstapel einen einzigen Weichmacher als auch Gemische von Weichmachern sowohl unterschiedlicher und gleicher Zusammensetzung enthalten. Mit unterschiedlicher Zusammensetzung ist sowohl die Art der Weichmacher als auch deren Anteil im Gemisch gemeint. Bevorzugt weisen die Folie A und Folie B nach dem laminieren d.h. im fertig gestellten Verbundglas den gleichen Weichmacher WA und WB auf. In einer bevorzugten Variante enthält die Folie A in ihrem Ausgangszustand aber keinen Weichmacher und nach dem Laminieren den Weichmacher WB.

Erfindungsgemäß verwendete weichmacherhaltige Folien B enthalten im Ausgangszustand vor dem Laminieren der Schichten mindestens 16 Gew%, wie 16.1 - 36.0 Gew.%, bevorzugt 22.0 - 32.0 Gew.% und insbesondere 26.0 - 30.0 Gew.% Weichmacher.

Erfindungsgemäß verwendete Folien A können im Ausgangszustand vor dem Laminieren der Schichten weniger als 16 Gew.% (wie 15.9 Gew.%), weniger als 12 Gew.-%, weniger als 8 Gew.-%, weniger als 6 Gew.-%, weniger als 4 Gew.-%, weniger als 3 Gew.-%, weniger als 2 Gew.-%, weniger als 1 Gew-%, jeweils mit der Untergrenze von 0 Gew.% an Weichmacher WA enthalten. Bevorzugt enthalten die weichmacherarmen Folien A 0.0 - 8 Gew.-% Weichmacher WA.

Im erfindungsgemäßen Verfahren weist die Folie A im Ausgangszustand vor dem Laminieren der Schichten eine Dicke von nicht mehr als 20%, bevorzugt 15% und bevorzugt nicht mehr als 10% der Dicke der Folie bzw. der Folien B auf. Die Dicke der Folie A schließt die elektrisch leitfähige Struktur mit ein.

Die Dicke einer Folie A im Ausgangszustand vor dem Laminieren der Schichten beträgt 10 - 150 µm, bevorzugt 20 - 120 µm, bevorzugt 30 - 100 µm, bevorzugt 40 - 80 µm und am meisten bevorzugt 50 - 70 µm. Im Verbundglas nimmt die Dicke der Folie durch Übergang von Weichmacher aus Folie B zu.

Die Folie A wird separat von Folie B hergestellt (z.B. extrudiert und weist entweder gar keinen Weichmacher oder einen so geringen Weichmacheranteil auf, dass sie bei der Herstellung und Weiterverarbeitung unter mechanischer Beanspruchung sich weder zu stark dehnt noch zu klebrig ist.

Die Dicke einer Folie B beträgt im Ausgangszustand 450 - 2500 µm, bevorzugt 600 - 1000 µm, bevorzugt 700 - 900 µm. Bei Verwendung mehrerer Folien B gilt entsprechendes für deren Gesamtdicke. Werden Folien B vor Herstellung des Sandwiches gereckt und / oder zusätzlich der Form einer Scheibe (z.B. Windschutzscheibe) bogenförmig angepasst, können sich die angegebenen Dicken zum Zeitpunkt der Lamination noch einmal um bis zu 20% verringern.

Mindestens eine dünne, Folie A mit der elektrisch leitfähigen Struktur ist zu einer Glasoberfläche des erfindungsgemäßen Verbundglaslaminats orientiert. Die Folie A kann hierbei mit der Oberfläche, welche die elektrisch leitfähige Struktur aufweist oder der Oberfläche, welche die elektrisch leitfähigen Strukturen nicht aufweist auf die Glasoberfläche aufgebracht werden.

Die die transparenten Scheiben können durch eine Schichtabfolge von drei Folien wie Folie A/Folie B/Folie A oder Folie B/Folie A/Folie B miteinander verbunden werden.

Es ist auch möglich, auf beide Glasoberflächen jeweils eine Folie A aufzubringen, so dass ein Verbundglaslaminat mit einer Schichtabfolge Glass/Folie A/ Folie B/ Folie A / Glass vorliegt. Hierbei kann die Dekoration der Folien A gleich oder unterschiedlich sein. Beispielsweise kann dabei eine der Folien A die elektrisch leitfähigen Struktur aufweisen und die zweite Folie A wärmeabsorbierende Schichten oder andere Schichten mit optischen Funktionen aufweisen.

Bei Automobilverglasung ist es aus ästhetischen und Dauerhaftigkeitsgründen nicht bevorzugt, die Kanten der Verbundglaslaminate mit Dichtstoffen zu versiegeln. Dies begünstigt die Anfälligkeit solcher Verglasungen gegenüber Ausbildung von Kantendefekten wie etwa Ablösungen der Schichten untereinander (Delaminationen) oder Korrosion bzw. chemischer Veränderung einer bis zur Kante des Laminates reichenden elektrisch leitfähigen Struktur.

Im erfindungsgemäßen Verfahren kann die weichmacherarme Folie A so zugeschnitten und positioniert werden, dass sie im Verbundglaslaminat nicht überall bis zum Rand des Laminates reicht. Insbesondere kann die Folie A im Randbereich um mindestens 1 mm kleiner sein als mindestens eine Glasscheibe sodass die Folie B in diesem Randbereich in direktem Kontakt mit mindestens einer Glasscheibe ist.

Weiterhin kann die dünne, im Ausgangszustand weichmacherarme oder weichmacherfreie Folie A vor dem Einlegen in den Glas / Foliensandwich perforiert werden, so dass sie Aussparungen wie Durchbrüche, Löcher, Schlitze in beliebigen geometrischen Mustern aufweisen kann.

So kann die Folie A mindestens eine Aussparung aufweisen, sodass die Folie B durch diese Aussparung in direktem Kontakt mit mindestens einer Glasscheibe ist. Nach dem Verkleben zum fertigen Verbundglas ist die Folie B mit im Ausgangszustand höherem Weichmachergehalt an diesen Stellen mit den Glasscheiben ohne Unterbrechung verklebt. Insbesondere können so Aussparungen an Stellen des Verbundglases erhalten werden, hinter welchen Optik-, Antennenelemente ansonsten durch eine elektrisch leitfähige Struktur in ihrer Funktion beeinträchtigt werden würden.

Die erfindungsgemäß eingesetzten Folien A und B enthalten Polyvinylacetale, welche durch Acetalisierung von Polyvinylalkohol oder Ethylen-Vinylalkohol-Copolymer hergestellt werden.

Die Folien können Polyvinylacetale mit jeweils unterschiedlichem Polyvinylalkoholgehalt, Acetalisierungsgrad, Restacetatgehalt, Ethylenanteil, Molekulargewicht bzw. unterschiedlichen Kettenlängen des Aldehydes der Acetalgruppen enthalten.

Insbesondere können die zur Herstellung der Polyvinylacetale eingesetzten Aldehyde oder Ketoverbindungen linear oder verzweigt (d.h. vom "n" oder "iso"-Typs) mit 2 bis 10 Kohlenstoffatomen sein, was zu entsprechenden linearen oder verzweigten Acetalgruppen führt. Die Polyvinylacetale werden entsprechend als "Polyvinyl(iso)acetale" oder "Polyvinyl(n)acetale" bezeichnet.

Das erfindungsgemäß verwendete Polyvinyl(n)acetal resultiert insbesondere aus der Umsetzung von mindestens einem Polvinylalkohol mit einer oder mehreren aliphatischen unverzweigten Ketoverbindung mit 2 bis 10 Kohlenstoffatomen. Bevorzugt wird hierzu n-Butyraldehyd verwendet.

Die zur Herstellung der Polyvinylacetale in den Folien A oder B verwendeten Polyvinylalkohole oder Ethylen-Vinylalkohol-Copolymere können jeweils gleich oder unterschiedlich, rein oder eine Mischung von Polyvinylalkoholen oder Ethylen-Vinylalkohol-Copolymere mit unterschiedlichem Polymerisationsgrad oder Hydrolysegrad sein.

Der Polyvinylacetatgehalt der Polyvinylacetale in den Folien A oder B kann durch Verwendung eines zu einem entsprechenden Grad verseiften Polyvinylalkohols oder Ethylen-Vinylalkohol-Copolymer eingestellt werden. Durch den Polyvinylacetatgehalt wird die Polarität des Polyvinylacetals beeinflusst, wodurch sich auch die Weichmacherverträglichkeit und die mechanische Festigkeit der jeweiligen Schicht ändern. Es ist auch möglich, die Acetalisierung der Polyvinylalkohole oder Ethylen-Vinylalkohol-Copolymere mit einem Gemisch aus mehreren Aldehyden oder Ketoverbindungen durchzuführen.

Bevorzugt enthalten die Folien A oder B Polyvinylacetale mit einem Anteil an Polyvinylacetatgruppen bezogen auf die Schichten jeweils gleich oder unterschiedlich 0.1 bis 20 Mol%, bevorzugt 0,5 bis 3 Mol% oder 5 bis 8 Mol%.

Der Polyvinylalkoholgehalt der verwendeten Polyvinylacetale PA der im Ausgangszustand weichmacherärmeren Folie A kann zwischen 6 - 26 Gew.-%, 8 - 24 Gew.-%, 10 - 22 Gew.-%, 12 - 21 Gew.-%, 14 - 20 Gew.-%, 16 - 19 Gew.-% und bevorzugt zwischen 16 und 21 Gew.-% oder 10 - 16 Gew.-% betragen.

Der Polyvinylalkoholgehalt der verwendeten Polyvinylacetale PB der im Ausgangszustand weichmacherreicheren Folie B kann zwischen 14 - 26 Gew.-%, 16 - 24 Gew.-%, 17 - 23 Gew.-% und bevorzugt zwischen 18 und 21 Gew.-% betragen.

Die Folien A oder B enthalten bevorzugt unvernetztes Polyvinylacetal. Der Einsatz von vernetzten Polyvinylacetalen ist ebenso möglich. Verfahren zur Vernetzung von Polyvinylacetalen sind z.B. in EP 1527107 B1 und WO 2004/063231 A1 (thermische Selbstvernetzung von Carboxylgruppenhaltigen Polyvinylacetalen), EP 1606325 A1 (mit Polyaldehyden vernetzte Polyvinylacetale) und WO 03/020776 A1 (mit Glyoxylsäure vernetzte Polyvinylacetale) beschrieben.

Die erfindungsgemäß eingesetzten Folien A und/oder B können als Weichmacher WA und WB jeweils eine oder mehrere Verbindungen ausgewählt aus folgenden Gruppen enthalten:
- Ester von mehrwertigen aliphatischen oder aromatischen Säuren, z.B. Dialkyladipate wie Dihexyladipat, Dioctyladipat, Hexylcyclohexyladipat, Mischungen aus Heptyl- und Nonyladipaten, Diisononyladipat, Heptylnonyladipat sowie Ester der Adipinsäure mit cycloaliphatischen oder Etherbindungen enthaltenden Esteralkoholen, Dialkylsebazate wie Dibutylsebazat sowie Ester der Sebazinsäure mit cycloaliphatischen oder Etherbindungen enthaltenden Esteralkoholen, Estern der Phthalsäure wie Butylbenzylphthalat oder Bis-2-butoxyethylphthalat
- Ester oder Ether von mehrwertigen aliphatischen oder aromatischen Alkoholen oder Oligoetherglykolen mit einem oder mehreren unverzweigen oder verzweigten aliphatischen oder aromatischen Substituenten, wie z.B. Estern von Glycerin, Di-, Tri- oder Tetraglykolen mit linearen oder verzweigten aliphatischen oder cycloaliphatischen Carbonsäuren; Als Beispiele für letztere Gruppe können Diethylenglykol-bis-(2-ethylhexanoat), Triethylenglykol-bis-(2-ethylhexanoat), Triethylenglykol-bis-(2-ethylbutanoat), Tetraethylenglykol-bis-n-heptanoat, Triethylenglykol-bis-n-heptanoat, Triethylenglykol-bis-n-hexanoat, Tetraethylenglykoldimethylether und/oder Dipropylenglykolbenzoat dienen
- Phosphate mit aliphatischen oder aromatischen Esteralkoholen wie z.B. Tris(2-ethylhexyl)phosphat (TOF), Triethylphosphat, Diphenyl-2-ethylhexylphosphat, und/oder Trikresylphosphat
- Ester der Zitronensäure, Bernsteinsäure und/oder Fumarsäure

Per Definition sind Weichmacher hochsiedende organische Flüssigkeiten. Aus diesem Grund können auch weitere Arten von organischen Flüssigkeiten mit einem Siedepunkt höher als 120 °C als Weichmacher verwendet werden.

Besonders bevorzugt enthalten die Folien A in den Varianten, bei welchen in Folie A im Ausganszustand ein Weichmacher WA vorhanden ist sowie Folien B 1,2-Cyclohexandicarbonsäurediisononylester (DINCH) oder Triethylenglykol-bis-2-ethylhexanoat (3GO bzw. 3G8) als Weichmacher.

Zusätzlich können die Folien A und B weitere Zusätze enthalten wie Restmengen an Wasser, UV-Absorber, Antioxidantien, Haftungsregulatoren, optische Aufheller bzw. fluoreszierende Zusätze, Stabilisatoren, Farbmittel, Verarbeitungshilfsmittel, organische oder anorganische Nanopartikel, pyrogene Kieselsäure und/oder oberflächenaktive Stoffe enthalten. Insbesondere kann Folie B als Haftungsregulatoren 0,001 bis 0,1 Gew.% Alkali- und/oder Erdalkalisalze von Carboxylsäuren aufweisen.

Zur Unterdrückung von Korrosionseffekten der über Folie A in das Verbundglas eingebrachten elektrisch leitfähigen Strukturen, insbesondere bei Verwendung von metallischen Leitermaterialien wie z.B. Silber, kann es hilfreich sein, ein Korrosionsschutzmittel im fertigen Laminat bereitzustellen. Bevorzugt kann das Korrosionsschutzmittel vor Lamination in Folie B enthalten sein und während und nach der Verklebung mit Folie A durch Diffusion auch in die dünnere Folie A bzw. in den Bereich von deren Beschichtung übergehen.

Alternativ ist das Korrosionsschutzmittel vor Lamination bereits in Folie A enthalten. Bevorzugt werden Korrosionsschutzmittel in Anteilen von 0.005 - 5 Gew.-% in Folie B oder / und A eingesetzt. Bevorzugt werden als Korrosionsschutzmittel unsubstituierte oder substituierte Benzotriazole verwendet.

Zur Vermeidung von Korrosion an den leitfähigen Strukturen ist bevorzugt das Folie A weniger als 150 ppm Chloridionen und/oder Nitrationen und/oder Sulfationen aufweist.

So kann der Chloridgehalt der Folie A geringer als 150 ppm, bevorzugt geringer als 100 ppm und insbesondere geringer als 50 ppm sein. Im Idealfall beträgt der Chloridgehalt der Folie A weniger als 10 ppm oder sogar 0 ppm.

Optional kann der Nitratgehalt der Folie A Folie weniger als 150 ppm betragen, bevorzugt weniger als 100 ppm und insbesondere weniger als 50 ppm betragen. Im Idealfall beträgt der Nitratgehalt der Folie A weniger als 10 ppm oder sogar 0 ppm.

Wiederum optional kann der Sulfatgehalt der Folie A Folie weniger als 150 ppm betragen, bevorzugt weniger als 100 ppm und insbesondere weniger als 50 ppm betragen. Im Idealfall beträgt der Sulfatgehalt der Folie A weniger als 10 ppm oder sogar 0 ppm.

Zusätzlich kann Folie A mehr als 0 ppm Magnesiumionen aufweisen. Bevorzugt beträgt der Magnesiumgehalt mehr als 5 ppm besonders bevorzugt 10 ppm, insbesondere 5 - 20 ppm

Es ist erfindungsgemäß möglich, zunächst die Folie A auf eine Glasscheibe durch erhöhte Temperatur vollflächig oder lokal anzuschmelzen und dann mit der Folie B abzudecken. Alternativ können die Folien A und B gemeinsam zwischen zwei Glasscheiben positioniert werden und bei erhöhter Temperatur verschmolzen werden.

Das Verkleben der transparenten Scheiben, d.h. der Laminationsschritt zur Herstellung des Verbundglases wird bevorzugt so durchgeführt, dass die Folien A und B zwischen zwei Glasscheiben positioniert werden und der so vorbereitete Schichtkörper unter erhöhtem oder vermindertem Druck und erhöhter Temperatur zu einem Laminat verpresst wird.

Zur Laminierung des Schichtkörpers können die dem Fachmann geläufigen Verfahren mit und ohne vorhergehender Herstellung eines Vorverbundes eingesetzt werden.

Sogenannte Autoklavenprozesse werden bei einem erhöhten Druck von ca. 10 bis 15 bar und Temperaturen von 100 bis 145 °C über ca. 2 Stunden durchgeführt. Vakuumsack- oder Vakuumringverfahren z.B. gemäß EP 1 235 683 B1 arbeiten bei ca. 200 mbar und 130 bis 145 °C

Es sind auch sog. Vakuumlaminatoren einsetzbar. Diese bestehen aus einer beheizbaren und evakuierbaren Kammer, in denen Verbundverglasungen innerhalb von 30 - 60 Minuten laminiert werden können. Verminderte Drücke von 0,01 bis 300 mbar und Temperaturen von 100 bis 200 °C, insbesondere 130 - 160 °C haben sich in der Praxis bewährt.

Im einfachsten Fall wird zur Herstellung der Verbundglaslaminate Folie A oder B auf eine Glasscheibe positioniert und hierzu synchron oder darauffolgend die weitere Folie B bzw. A. Im Anschluss daran wird die zweite Glasscheibe aufgelegt und ein Glasfolienverbund erzeugt. Überschüssige Luft kann danach mithilfe eines beliebigen dem Fachmann bekannten Vorverbundverfahrens entfernt werden. Hierbei erfolgt auch bereits ein erstes leichtes Verkleben der Schichten untereinander sowie mit dem Glas.

Der Glasfolienverbund kann abschließend einem Autoklavenprozess unterworfen werden. Bevorzugt wird Folie A auf der ersten Glasscheibe positioniert und mit der dickeren Folie B bedeckt, bevor die zweite Glasscheibe aufgelegt wird. Das Verfahren kann in vielen denkbaren und grundsätzlich praktikablen Varianten durchgeführt werden. Beispielsweise wird Folie A einfach von einer Rolle entsprechender Breite entnommen wogegen Folie B vorher auf Maß des herzustellenden Verbundglases zugeschnitten wurde. Dies ist insbesondere im Fall von Windschutzscheiben und anderen Automobilverglasungsteilen von Vorteil. In diesem Fall ist es besonders vorteilhaft, die dickere Folie B vor Zuschnitt zusätzlich noch zu Recken. Dies ermöglicht einen sparsameren Folieneinsatz bzw. für den Fall, dass Folie B ein Farbkeil aufweist, das Anpassen von dessen Krümmung an den oberen Scheibenrand.

Im Automobilbereich, insbesondere zur Herstellung von Windschutzscheiben werden häufig Folien verwendet, die im oberen Bereich ein sog. Farbband aufweisen. Hierzu kann entweder der obere Teil der Folien A und B mit einer entsprechend eingefärbten Polymerschmelze coextrudiert werden oder es kann in einem Mehrschichtsystem eine der Folien A und B in Teilbereichen eine unterschiedliche Färbung aufweisen. In der vorliegenden Erfindung ist dies durch vollständiges oder teilweises Einfärben zumindest einer der Folien A und B realisierbar.

Erfindungsgemäß können die Folien B daher einen Farbkeil aufweisen, welcher insbesondere bereits in einem vorgelagerten Prozessschritt der Geometrie einer Windsschutzscheibe angepasst wurde.

Es auch möglich das die Folien B ein keilförmige Dickenprofil besitzen. Hierdurch erhält das erfindungsgemäße Verbundglaslaminat selbst bei planparallelem Dickenprofil der Folie A ein keilförmiges Dickenprofil und kann in KFZ-Windschutzscheiben für HUD Displays eingesetzt werden.

Im einfachsten Fall ist die Folie B eine handelsüblichen PVB-Folie mit oder ohne Farbband und mit oder ohne keilförmigen Dickenprofil. Ebenfalls können Folien B mit darin zum IR-Schutz dispergierten Nanopartikeln als auch gefärbte Folien verwendet werden. Natürlich kann eine Folie B auch eine Folie mit Akustikfunktion sein, so dass durch Kombination mit einer Folie A verbesserte Schalldämmeigenschaften erhalten werden. Natürlich kann eine Folie B bereits auch mehrere der genannten Funktionen in sich vereinen.

Die Herstellung der dünnen Folien A erfolgt in der Regel durch Extrusion unter Verwendung einer Cast-Film Linie oder als Blasfolie. Hierbei kann eine Oberflächenrauhigkeit durch kontrollierten Fließbruch oder beim Cast-Film Verfahren zusätzlich durch Verwendung einer strukturierten Chillroll erfolgen.

Zusätzlich kann einer bereits hergestellten Folie durch einen Prägevorgang zwischen mindestens einem Walzenpaar eine regelmäßige, nicht stochastische Rauhigkeit aufgeprägt werden. Bevorzugt weisen erfindungsgemäß verwendete Folien eine einseitige Oberflächenstruktur mit einer Rauhigkeit Rz von 0 bis 25 µm, bevorzugt Rz von 1 bis 20 µm, besonders bevorzugt Rz von 3 bis 15 µm und insbesondere Rz von 4 bis 12 µm auf. Besonders bevorzugt ist, wenn die mit der Glasscheibe in Kontakt kommende Seite der Folie A eine Oberflächenrauhigkeit Rz von nicht mehr als 20% ihrer Dicke aufweist. Die mit der elektrisch leitfähigen Struktur versehene Oberfläche weist vor Aufbringen der Beschichtung bevorzugt eine besonders geringe Oberflächenrauhigkeit auf. Insbesondere beträgt hier der Rauhigkeitsparameter Ra weniger als 3 µm und Rz weniger als 5 µm.

## Patentansprüche

1. Folie mit elektrisch leitfähigen Strukturen, **dadurch gekennzeichnet, dass** die Folie ein Polyvinylacetal PA und 0 bis 16 Gew% mindestens eines Weichmachers WA sowie diskrete, elektrisch leitfähige Strukturen aufweist.

2. Folie nach Anspruch 1 **dadurch gekennzeichnet, dass** die diskreten, elektrisch leitfähigen Strukturen auf der Oberfläche der Folie aufgebracht sind.

3. Folie nach Anspruch 1 oder 2 **dadurch gekennzeichnet, dass** die diskreten, elektrisch leitfähigen Strukturen eine Dicke von 0.1 - 50 µm aufweisen.

4. Folie nach einem der Ansprüche 1 bis 3 **dadurch gekennzeichnet, dass** die diskreten, elektrisch leitfähigen Strukturen eine Breite von 1 - 30 µm aufweisen.

5. Folie nach einem der Ansprüche 1 bis 4 **dadurch gekennzeichnet, dass** die Folie ein Polyvinylacetal PA mit einem Anteil an Vinylalkoholgruppen von 6 bis 26 Gew.% aufweist.

6. Folie nach einem der Ansprüche 1 bis 5 **dadurch gekennzeichnet, dass** die Folie 0.005 - 5 Gew.-% eines Korrosionsschutzmittel enthält.

7. Folie nach einem der Ansprüche 1 bis 6 **dadurch gekennzeichnet, dass** die Folie weniger als 150 ppm Chloridionen und/oder Nitrationen und/oder Sulfationen aufweist.

8. Folie nach einem der Ansprüche 1 bis 7 **dadurch gekennzeichnet, dass** Folie mehr als 0 ppm Magnesiumionen aufweist.

9. Folie nach einem der Ansprüche 1 bis 8 **dadurch gekennzeichnet, das** die elektrisch leitfähigen Strukturen Heizelemente oder Antennen sind.

10. Laminat, enthaltend mindestens eine Folie nach einem der Ansprüche 1 bis 9, die zwischen zwei transparente Scheiben positioniert ist.

11. Laminat nach Anspruch 10 **dadurch gekennzeichnet, dass** die Folie die transparenten Scheiben miteinander verklebt.

12. Verwendung der Folie nach einem der Ansprüche 1 bis 9 zur elektromagnetischen Abschirmung von Frequenzfeldern, zur Erzeugung elektrischer Stromkreise wie Leiterbahnen oder Sende- und/oder Empfangsantennen, als Heizelement oder als Berührungssensor.

## Claims

1. A film with electrically conductive structures, **characterized in that** the film has a polyvinyl acetal PA and 0 to 16% by weight of at least one plasticizer WA as well as discrete electrically conductive structures.

2. The film as claimed in claim 1, **characterized in that** the discrete electrically conductive structures are applied to the surface of the film.

3. The film as claimed in claim 1 or claim 2, **characterized in that** the discrete electrically conductive structures have a thickness of 0.1 - 50 µm.

4. The film as claimed in one of claims 1 to 3, **characterized in that** the discrete electrically conductive structures have a width of 1 - 30 µm.

5. The film as claimed in one of claims 1 to 4, **characterized in that** the film has a polyvinyl acetal PA with a proportion of vinyl alcohol groups of 6% to 26% by weight.

6. The film as claimed in one of claims 1 to 5, **characterized in that** the film contains 0.005 - 5% by weight of a corrosion inhibitor.

7. The film as claimed in one of claims 1 to 6, **characterized in that** the film has less than 150 ppm of chloride ions and/or nitrate ions and/or sulphate ions.

8. The film as claimed in one of claims 1 to 7, **characterized in that** the film has more than 0 ppm of magnesium ions.

9. The film as claimed in one of claims 1 to 8, **characterized in that** the electrically conductive structures are heating elements or antennae.

10. A laminate containing at least one film as claimed in one of claims 1 to 9, which is positioned between two transparent sheets.

11. The laminate as claimed in claim 10, **characterized in that** the film bonds the transparent sheets together.

12. Use of the film as claimed in one of claims 1 to 9 for electromagnetic screening of frequency fields, for the production of electrical circuits such as strip conductors or transmitting and/or receiving antenna, as a heating element or as a touch sensor.

## Revendications

1. Feuille pourvue de structures conductrices d'électricité, **caractérisée en ce que** ladite feuille comporte un acétal de polyvinyle PA et 0 à 16 % en poids d'au moins un plastifiant WA ainsi que des structures discrètes qui sont conductrices d'électricité.

2. Feuille selon la revendication 1, **caractérisée en ce que** les structures discrètes conductrices d'électricité ont été appliquées sur la surface de ladite feuille.

3. Feuille selon les revendications 1 ou 2, **caractérisée en ce que** les structures discrètes conductrices d'électricité ont une épaisseur comprise entre 0,1 et 50 µm.

4. Feuille selon les revendications 1 à 3, **caractérisée en ce que** les structures discrètes conductrices d'électricité ont une largeur comprise entre 1 et 30 µm.

5. Feuille selon l'une des revendications 1 à 4, **caractérisée en ce que** ladite feuille comporte un acétal de polyvinyle PA ayant une proportion de groupes d'alcool vinylique comprise entre 6 et 26 % en poids.

6. Feuille selon l'une des revendications 1 à 5, **caractérisée en ce que** ladite feuille contient entre 0,005 et 5 % en poids d'un agent anticorrosion.

7. Feuille selon l'une des revendications 1 à 6, **caractérisée en ce que** ladite feuille comporte moins de 150 ppm d'ions de chlorure et/ou d'ions de nitrate et/ou d'ions de sulfate.

8. Feuille selon l'une des revendications 1 à 7, **caractérisée en ce que** la teneur de ladite feuille en ions de magnésium est supérieure à 0 ppm.

9. Feuille selon l'une des revendications 1 à 8, **caractérisée en ce que** lesdites structures conductrices d'électricité sont des éléments chauffants ou des antennes.

10. Elément stratifié, contenant au moins une feuille selon l'une des revendications 1 à 9 qui est positionnée entre deux vitres transparentes.

11. Elément stratifié selon la revendication 10, **caractérisé en ce que** ladite feuille et lesdites vitres transparentes sont assemblées par collage.

12. Utilisation de la feuille selon l'une des revendications 1 à 9 pour le blindage électromagnétique de champs de fréquence, pour la réalisation de circuits électriques tels que les pistes conductrices ou les antennes d'émission et/ou de réception, en tant qu'élément chauffant ou en tant que capteur tactile.
